# EUROPEAN PATENT SPECIFICATION

(11) **EP 2 477 134 B1**
(45) Date of publication and mention of the grant of the patent: **02.04.2014**
(21) Application number: 12163774.8
(22) Date of filing: 28.08.2007
(51) Int. Cl.: G06F 21/10

(54) **Method and system of license interaction and recovering after its interrupting**
Verfahren und System zur Lizenzinteraktion und zur Wiederherstellung nach deren Unterbrechung
Procédé et système d'interaction de licence et de récupération après interruption

(30) Priority: 08.12.2006 CN 200610167115
(43) Date of publication of application: 18.07.2012
(62) Divisional of application: 07800805.9
(73) Proprietor: Huawei Technologies Co., Ltd., Longgang District, Shenzhen Guangdong 518129 (CN)
(72) Inventor: Zhou, Haojun, Shenzhen Guangdong 518129 (CN); Zhang, Renzhou, Shenzhen Guangdong 518129 (CN); Zhou, Zhipeng, Shenzhen Guangdong 518129 (CN); Dang, Pei, Shenzhen Guangdong 518129 (CN); Huang, Chen, Shenzhen Guangdong 518129 (CN); Feng, Wenjie, Shenzhen Guangdong 518129 (CN); Wang, Jue, Shenzhen Guangdong 518129 (CN)
(74) Representative: Kreuz, Georg Maria

(56) References cited:
- WO-A1-2005/093989
- US-A1- 2002 013 772

## Description

### Field of the Invention

The present invention relates to digital rights management technologies, and in particular, to a method and system for license interaction and interaction recovery after interruption.

### Background of the Invention

Digital rights management (DRM) controls the use of a digital content through rights restriction and content protection schemes, and protects the legal rights of a content owner. After a content issuer (CI) encrypts a digital content, a user downloads the encrypted digital content package to a terminal device. A rights issuer (RI) is responsible for distributing a license corresponding to the digital content. The license includes a content key and the related rights, where the content key is adapted to decrypt the digital content. The terminal device can use the purchased digital content only when the terminal device includes the content package (including information necessary for decrypting the digital content) and the license. A DRM agent module in the terminal device decrypts a license key by using the public key of the terminal device, obtains the content key according to the license key to decrypt the digital content, and controls the use of the digital content according to the rights information in the license.

Multiple licenses including different rights may be prepared for a same digital content, e.g., for a document, BROWSE, PRINT and MOVE rights are set in some licenses, while only the BROWSE right is set in other licenses.

A device may consume independently its own license and uses the digital content corresponding to the license or consume a license in a secure removable media (SRM) and use the digital content of the license through interactions with the SRM. The SRM is a secure storage card or intelligent card and stores the license. Interaction with the SRM may facilitate the consumption of the license in multiple devices.

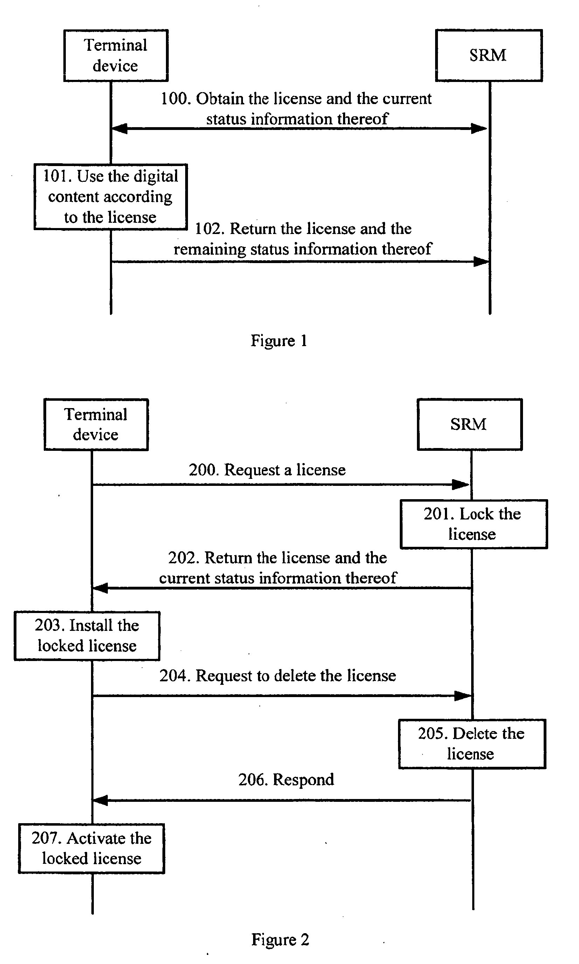

As shown in Figure 1, the process of consuming a license online by a terminal device through an SRM includes the following steps:

Step 100: The terminal device sends a request for obtaining a license to the SRM After receiving the request from the terminal device, the SRM returns the license and the current status information of the license to the terminal device.

Step 101: After receiving the license and the current status information of the license, the terminal device uses the digital content according to the rights information in the license.

Step 102: When the terminal device stops using the digital content, the terminal device returns the license and the remaining status information thereof to the SRM automatically.

In the process as shown in Figure 1, there are steps of selecting a license and establishing a security channel before step 100. The license may be a complete license or part of the license that carries necessary information for the consumption, such as the content key and rights. The status information refers to the consumption detail of the current license. For example, if the license initially allows the device to use the digital content ten times, eight times remain after the digital content is used twice.

As shown in Figure 2, the process of obtaining a license by a terminal device from an SRM in the prior art includes the following steps:

Step 200: The terminal device sends a request for obtaining a license to the SRM

Step 201: After receiving the request from the terminal device, the SRM locks the local license.

Step 202: The SRM returns the license and the current status information of the license to the terminal device.

Step 203: The terminal device installs the received locked license.

Step 204: The terminal device returns a response message to the SRM, notifying the SRM of installing the license successfully, and requesting the SRM to delete the local license.

Step 205: After receiving the response message returned from the terminal device, the SRM deletes the local license.

Step 206: The SRM returns a response message to the terminal device, notifying the terminal device of deleting the license successfully.

Step 207: After receiving the response message indicating successful deletion of the license from the SRM, the terminal device activates the locked license locally.

Communication failures are not considered in the prior art. For example, when the terminal device is consuming the license, the communication channel between the terminal device and the SRM is interrupted (For example, the user unplugs a card from the device). In this case, the terminal device cannot return the license and the remaining status information of the license to the SRM automatically. Thus, the user may move a license without the MOVE right from the SRM to the terminal device in the case of communication failure. In addition, the license cannot be moved back to the SRM, thus losing the mobility.

Further, the communication channel between the terminal device and the SRM may be interrupted during the interaction. For example, as shown in Figure 2, if the communication between the terminal device and the SRM is interrupted after the terminal device installs a locked license, both parties cannot use the locked license, thus wasting the rights.
WO 2005/093989 A1 discloses a digital license sharing method, system and apparatus for use in a digital rights management system. Usage rights in respect of digital content are transferred between content player devices or applications by associating with each player a status indication. Transfer is carried out by transmitting a request to obtain the usage rights from a player requiring usage rights to a player currently holding the rights. The transferring player sets a first status indication to indicate that it is no longer entitled to exercise the rights, and transmits a response to the requesting player to transfer the usage rights. The requesting player then sets a second status indication to indicate that it is henceforth entitled to exercise the rights.

### Summary of the Invention

Embodiments of the present invention provide a method and system for license interaction and interaction recovery after interruption so as to overcome the problems of the mobility loss and waste of rights of the license due to interruption of communication during the license interaction in the prior art.

Embodiments of the present invention provide the following technical solution:

A method of recovering a communication that is interrupted when a terminal device requests an SRM to delete a license during a license transfer, comprising: sending, by terminal device, a request for obtaining the license to the SRM, and recording, by the terminal device, current interaction related information; searching, by the SRM, for a license locally that is requested by the terminal device, locking the license and recording a current interaction related information; returning, by the SRM, the locked license and the status information to the terminal device; receiving, by the terminal device, the license and the status information installing the license returned by the SRM and updating, by the terminal device, the interaction related information; detecting, by the terminal device, that the communication with the SRM is interrupted when the terminal device requests the SRM to delete the license; updating, by the terminal device, the interaction related information; detecting, by the terminal device, that the communication with the SRM is recovered; checking, by the terminal device, whether the interaction with the SRM is uncompleted according to an SRM ID in the recorded interaction related information; after determining that the interaction with the SRM is uncompleted when the terminal device requests the SRM to delete the license, requesting, by the terminal device, the SRM to recover the interaction, and providing, by the terminal device, the SRM with the recorded interaction related information; checking, by the SRM, whether there is interaction related information locally after receiving the request from the terminal device; recovering, by the SRM, the interaction starting from the related step after determining that there is interaction related information, and returning by the SRM, a response message to the terminal device; requesting, by the terminal device, the SRM to delete the local license after receiving the response message from the SRM, and updating, by the terminal device, the interaction related information; deleting, by the SRM, the local license and updating the interaction related information according to the request from the terminal device. sending, by the SRM, a response message to the terminal device after deleting the license; activating, by the terminal device, the locally locked license after receiving the response message from the SRM.

Embodiments of the present invention may bring the following benefits:

In the present invention, a device records the interaction related information during the interaction of the license information, and after the interaction is interrupted and the connection is re-established, when determining that the interaction is uncompleted according to the recorded information, continues the uncompleted interaction. This enables the device to recover the interaction after the interaction is interrupted and the connection is re-established, thus overcoming the mobility loss of the license and waste of rights of the license.

### Brief Description of the Drawings

Figure 1 shows a process of consuming a license online by a terminal device through an SRM in the prior art;
Figure 2 shows a process of obtaining a license online by a terminal device through an SRM in the prior art;
Figure 3 shows a structure of a DRM system according to an embodiment of the present invention;
Figure 4 shows a structure of a terminal device according to an embodiment of the present invention;
Figure 5 shows a process of recovering the communication that is interrupted when a terminal device consumes a license online through an SRM according to an embodiment of the present invention;
Figure 6 shows a process of returning a license to an SRM by a terminal device according to an embodiment of the present invention; and
Figure 7 shows a process of recovering the communication between a terminal device and an SRM that is interrupted when the terminal device requests the SRM to delete a license during the license transfer according to an embodiment of the present invention.

### Detailed Description of the Embodiments

In embodiments of the present invention, when license information is exchanged between a first device and a second device, at least one of the two devices records the information related to the interaction and after the interaction is interrupted and the connection between the two devices is re-established, continues the uncompleted interaction according to the recorded information.

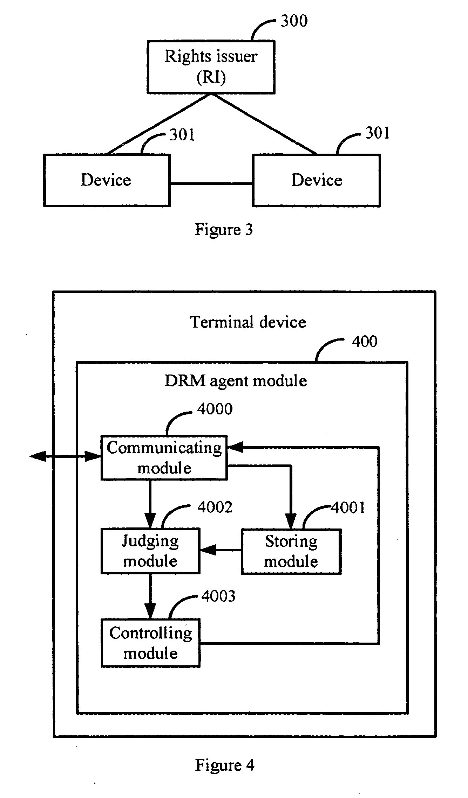

Figure 3 shows a DRM system provided in an embodiment of the present invention. The DRM system includes an RI 300 and one or multiple devices 301 connected to the RI 300. The RI 300 is adapted to distribute a license that corresponds to a digital content. The license includes a content key and the related rights, wherein the content key is adapted to decrypt the digital content. The multiple devices may exchange the license information with each other; when the interaction between a first device and a second device is interrupted, after the connection is re-established and it is determined that the interaction is uncompleted, the uncompleted interaction may be continued. The license information may be a complete license or some information of the license, such as the content key and partial rights.

The first device and the second device may be both terminal devices, or one of the two devices is a terminal device and the other is a secure removable media (SRM). Embodiments of the present invention are hereinafter described, supposing the first device is a terminal device and the second device is an SRM

When the license information is exchanged between the terminal device and the SRM, at least one of them records the information related to the interaction. Preferably, both of them record the information related to the interaction. The related information includes information about the peer device. For example, when the terminal device obtains the license from the SRM, the terminal device records the related information of the SRM (for example, the SRM ID) and associates the related information of the SRM with the obtained license. This association operation includes the following: the terminal device adds one field inside or outside the license, wherein the field indicates the SRM to which the license belongs. Alternatively, the association operation includes: the terminal device maintains an association table locally, wherein the association table indicates the SRM and one or multiple licenses that are associated with the SRM. If a license is associated with an SRM, the license needs to be returned to the SRM. When a license is moved back to the SRM, the terminal device deletes the license in the association table. Optionally, the terminal device may attach a parameter to the field information or the association table to indicate that the license is used for online consumption. The preceding association operation may be performed before the terminal device consumes the license online through the SRM, that is, it is performed when the terminal device obtains the license and records the SRM related information. The association operation may also be performed locally after the terminal device detects that the communication between the terminal device and the SRM is interrupted. The terminal device may judge, according to the recorded SRM ID, whether the local license belongs to the SRM

The related information also includes the type of current interaction (for example, transfer or replication of license) and current interaction status. The current interaction status refers to the current interaction step. What operations will be performed and which message will be sent may be determined according to the current interaction status. Further, the related information includes a session ID of the interaction. The session ID is negotiated at the beginning of interaction, and uniquely identifies an interaction. The related information also includes other information necessary for the interaction and interaction result of the previous step, for example, the ID of the license that is associated with the interaction and whether the operation in the previous step succeeds.

During the interaction, both parties need to maintain respective interaction related information and update the current interaction status in time. After the interaction is completed, the interaction related information may be deleted, or the interaction related information is periodically cleared or deleted after existing for a long time. When both parties re-establish the connection after the interaction is interrupted, one party may request the other party to continue the uncompleted interaction. One party notifies the other party of the interaction related information and the other party judges whether the interaction related information recorded by both parties can be matched. If so, both parties continue the interaction. Both parties may also continue the interaction according to the recorded information through negotiations.

During the interaction, the terminal device may detect the interaction with the SRM through a lower-layer driver. For example, the terminal device detects an event or interruption that occurs when the SRM card is unplugged. The terminal device may also detect the interaction through an application layer. For example, the terminal device sends a detection message to the SRM on a regular basis; if no response message from the SRM is received, the terminal device determines that the communication is interrupted.

When the terminal device detects that the communication with the SRM is interrupted, the terminal device may stop using the digital content immediately or may continue using the digital content according to the locally obtained license information within a specified grace period. If the communication between the terminal device and the SRM is recovered within the specified grace period, the terminal device consumes the license online in normal mode; if the communication between the terminal device and the SRM is not recovered within the specified grace period, the terminal device stops using the digital content.

When the terminal device stops using the digital content, the locally obtained license is set to be unavailable; for example, an unavailable mark is attached to the license so that the terminal device cannot continue using the digital content according to the local license information. In this case, the terminal device may prompt the user to re-insert the SRM card.

Alternatively, when the terminal device detects that the communication with the SRM is interrupted, the terminal device may continue using the digital content according to the local license information until the rights are used up or the user does not need this license to use the digital content.

As shown in Figure 4, a terminal device includes a DRM agent module 400, where the DRM agent module 400 is adapted to manage and control digital rights. The DRM agent module 400 includes a communicating module 4000, a storing module 4001, a judging module 4002, and a controlling module 4003. The communicating module 4000 is adapted to exchange the license information with the SRM. The storing module 4001 is adapted to store the information related to the interaction with the SRM. The judging module 4002 is adapted to judge, according to the related information, whether the interaction with the SRM is uncompleted, after the interaction with the SRM is interrupted and the connection is re-established. The controlling module 4003 is adapted to instruct the communicating module 4000 to continue the uncompleted interaction when determining that the interaction with the SRM is uncompleted.

The communicating module 4000, storing module 4001, judging module 4002, and controlling module 4003 as shown in Figure 4 are preferably contained in the DRM agent module 400. These modules may also be independent of the DRM agent module 400.

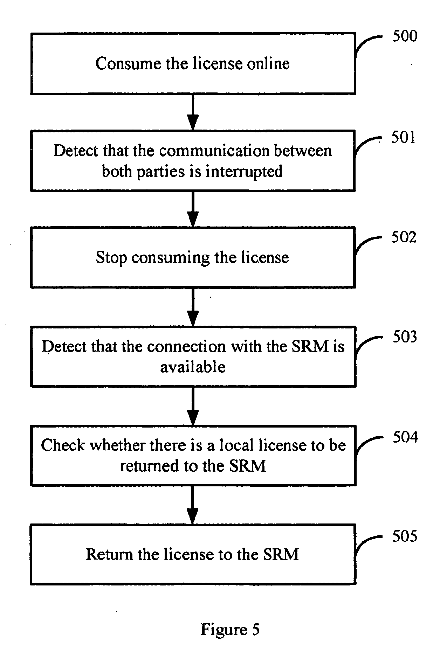

As shown in Figure 5, the process of recovering the communication that is interrupted when the terminal device consumes the license online through the SRM includes the following steps:

Step 500: The terminal device consumes the license online through the SRM. Before doing this, the terminal device needs to obtain the information that is necessary for consuming the license online from the SRM, such as the content key and the right of using the content.

Step 501: The terminal device detects that the communication with the SRM is interrupted.

Step 502: The terminal device stops consuming the license online after detecting that the communication with the SRM is interrupted.

Step 503: After a period of time, the terminal device detects that the connection with the SRM is available.

Step 504: The terminal device checks whether a local license needs to be returned to the SRM. The license is provided by the SRM to the terminal device for previous online consumption and fails to be returned to the SRM

Step 505: The terminal device returns the license to the SRM after determining that the local license needs to be returned to the SRM

In step 504, the terminal device may judge, according to the SRM ID, whether the local license belongs to the SRM. To return the license information to the right SRM, the terminal device records the SRM related information during the previous online consumption. Thus, the terminal device can check whether there are local licenses which fail to be returned belonging to the SRM when detecting that the connection with the SRM is available.

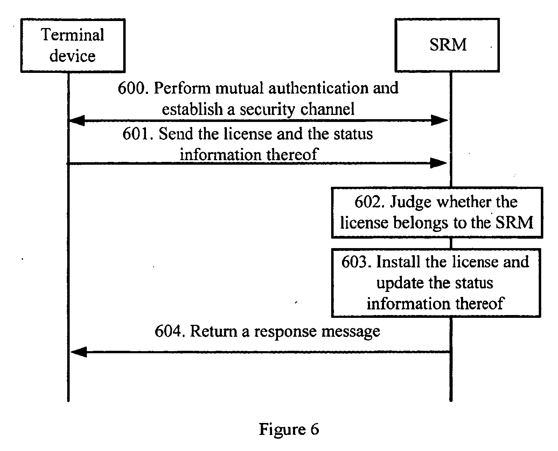

In step 505, the process of returning a license to the SRM by the terminal device includes the following steps, as shown in Figure 6.

Step 600: The terminal device and the SRM perform mutual authentication and establish a security channel. The mutual authentication means that the terminal device exchanges a certificate or a certificate chain with the SRM, and judges, according to the signature of the certificate authority (CA) on the certificate, whether the certificate is valid. The terminal device may also judge, by checking the certificate revocation list (CRL) or according to the Online Certificate Status Protocol (OCSP), whether the certificate is revoked. Establishing a security channel means that a channel key is negotiated between the terminal device and the SRM through negotiations. The channel key is adapted to encrypt some sensitive information in the communication so as to prevent this information from being obtained by a third party.

Step 601: After the terminal device and the SRM perform mutual authentication and establish the security channel, the terminal device sends the license and the status information of the license to the SRM. The sent information may be encrypted by using the channel key. The sent license may be one or more complete licenses or some information of the license. In addition, if the sent license is a stateless license, the terminal device does not need to send the status information of the license to the SRM

Step 602: The SRM receives the license from the terminal device, and judges whether the received license belongs to the SRM. When the SRM provides the license to the terminal device for online consumption, the license related information, for example, the license ID, is stored locally. After receiving the license from the terminal device, the SRM checks whether the license related information is stored locally.

Step 603: After determining that the received license belongs to the SRM, the SRM re-installs the received license locally, and updates the current status information of the license according to the status information of the received license. If the SRM determines that there is no information related to the received license locally, the SRM refuses to install the received license.

Step 604: The SRM returns a response message of installation failure or success to the terminal device. The terminal device may delete the local license after receiving the response message of installation success.

In the process as shown in Figure 6, there is another possible implementation mode. That is, when the SRM transfers the license to the terminal device, the SRM stores the original license locally, and sets the license to be unavailable. In this case, when the terminal device returns the license information to the SRM, it needs to return the ID of one or more licenses and the status information of the license only. After receiving the license information returned by the terminal device, the SRM finds the original license locally according to the license ID, resets the license status to available, and updates the status information. After the operation succeeds, the SRM returns a response message of installation success to the terminal device. If the SRM cannot find the license ID locally, the SRM returns a response message of installation failure to the terminal device.

In the process as shown in Figure 5, when the terminal device detects that the connection with the SRM is available, the terminal device returns the license information that belongs to the SRM to the SRM automatically. Another possible implementation mode is as follows: When the terminal device detects that the connection with the SRM is available, the terminal device judges whether there is a license that belongs to the SRM and is used for online consumption. If so, the terminal device changes the license status from unavailable to available. For example, the terminal device removes the unavailable mark, so that the terminal device may use the digital content by continuing to consume the license.

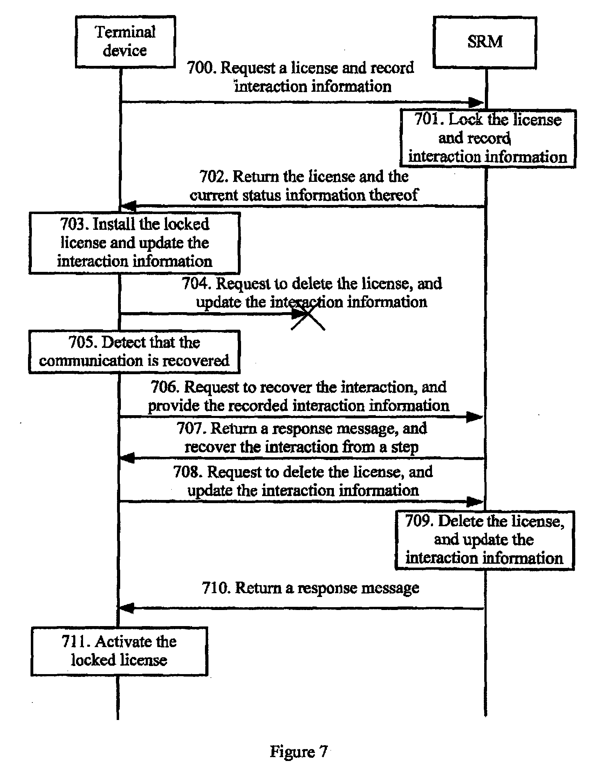

As shown in Figure 7, the process of recovering the communication that is interrupted when the terminal device requests the SRM to delete the license during the license transfer includes the following steps:

Step 700: The terminal device sends a request for obtaining a license to the SRM, and records current interaction related information.

Step 701: The SRM searches for the license locally that is requested by the terminal device, locks the license, and records current interaction related information.

Step 702: The SRM returns the locked license and the status information thereof to the terminal device.

Step 703: The terminal device receives the license and the status information thereof, installs the license, and updates the interaction related information.

Step 704: When the terminal device requests the SRM to delete the license, the terminal device detects that the communication with the SRM is interrupted. Then, the terminal device updates the interaction related information.

Step 705: The terminal device detects that the communication with the SRM is recovered. For example, it detects that an SRM card is inserted in the terminal device.

Step 706: The terminal device checks whether the interaction with the SRM is uncompleted according to the SRM ID in the recorded information; after determining that the interaction with the SRM is uncompleted when the terminal device requests the SRM to delete the license, the terminal device requests the SRM to recover the interaction, and provides the SRM with the recorded information.

Step 707: After receiving the request from the terminal device, the SRM checks whether there is interaction related information locally; after determining that there is interaction related information, the SRM recovers the interaction starting from the related step, and returns a response message to the terminal device.

Step 708: After receiving the response message from the SRM, the terminal device requests the SRM to delete the local license and update the interaction related information.

Step 709: The SRM deletes the local license and updates the interaction related information according to the request from the terminal device.

Step 710: After deleting the license, the SRM sends a response message to the terminal device.

Step 711: After receiving the response message from the SRM, the terminal device activates the locally locked license.

In the process as shown in Figure 7, the terminal device and the SRM start with performing normal interaction, but need to update the interaction related information and record the current step after each interaction step is completed. Before the interaction, a channel key for encrypting the interaction information may be negotiated between the terminal device and the SRM. In step 707, after receiving the request for recovering the interaction from the terminal device, the SRM checks whether the interaction related information is stored locally. If not, the SRM rejects the request for recovering the interaction; otherwise, the SRM further judges which step the recovery starts from. In the process as shown in Figure 7, the SRM finds that the terminal device has performed the third step of the interaction, but the SRM has performed the second step of the interaction only. Thus, the SRM notifies the terminal device of re-performing the interaction from the third step. Another possible implementation mode is as follows: The SRM returns the recorded interaction information to the terminal device for confirmation. Afterwards, the terminal device resends a request for deleting the license to the SRM, and performs the subsequent interaction.

The process of recovering the communication between the terminal device and the SRM that is interrupted when the SRM sends the locked license to the terminal device or when the SRM deletes the locally locked license and returns a response message of successful deletion to the terminal device is similar to that shown in Figure 7. In addition, the process of exchanging the license information between the terminal devices is similar to the preceding process of exchanging the license information between the terminal device and the SRM

According to the preceding embodiments of the present invention, a device records the interaction related information during exchanging the license information, and continues the uncompleted interaction when determining that the interaction is uncompleted according to the recorded interaction information after the interaction is interrupted and the connection is re-established. This enables the device to recover the interaction after the interaction is interrupted and the connection is re-established, thus overcoming the problems of the mobility loss and waste of rights of the license due to unrecoverable interruption of the interaction.

It is apparent that those skilled in the art can make various modifications and variations to the invention. The present invention is intended to cover these modifications and variations provided that they fall in the scope of protection defined by the following claims or their equivalents.

## Claims

1. A method of recovering a communication that is interrupted when a terminal device requests a secure removable media, SRM, to delete a license during a license transfer, comprising:
sending (700), by the terminal device, a request for obtaining the license to the SRM, and recording, by the terminal device, current interaction related information, wherein the interaction related information comprises a current interaction status, and the current interaction status refers to the current interaction step;
searching (701), by the SRM, for a license locally that is requested by the terminal device, locking the license and recording current interaction related information;
returning (702), by the SRM, the locked license and the status information to the terminal device;
receiving (703), by the terminal device, the locked license and the status information, installing the locked license returned by the SRM and updating, by the terminal device, the interaction related information;
detecting (704), by the terminal device, that the communication with the SRM is interrupted when the terminal device requests the SRM to delete the license, and updating, by the terminal device, the interaction related information;
detecting (705), by the terminal device, that the communication with the SRM is recovered;
checking (706), by the terminal device, whether the interaction with the SRM is uncompleted according to an SRM ID in the recorded interaction related information; after determining that the interaction with the SRM is uncompleted when the terminal device requests the SRM to delete the license, requesting, by the terminal device, the SRM to recover the interaction, and providing, by the terminal device, the SRM with the recorded interaction related information;
checking (707), by the SRM, whether there is interaction related information locally after receiving the request from the terminal device, recovering, by the SRM, the interaction starting from the related step after determining that there is interaction related information, and returning by the SRM, a response message to the terminal device;
requesting (708), by the terminal device, the SRM to delete the local license after receiving the response message from the SRM, and updating, by the terminal device, the interaction related information;
deleting (709), by the SRM, the local license and updating the interaction related information according to the request from the terminal device (709);
sending (710), by the SRM, a response message to the terminal device after deleting the license; and
activating (711), by the terminal device, the locally locked license after receiving the response message from the SRM.

2. The method of claim 1, wherein the interaction related information comprises further at least one or any combination of: ID of a peer device during the interaction, license ID, type of interaction operation, current interaction result, and unique interaction ID.

## Patentansprüche

1. Verfahren zum Wiederherstellen einer Kommunikation, die unterbrochen wird, wenn eine Endgerätvorrichtung ein sicheres entnehmbares Medium, SRM (Secure Removable Media), während einer Lizenzübertragung auffordert, eine Lizenz zu löschen, das Folgendes umfasst:
Senden (700) durch die Endgerätvorrichtung einer Anforderung, um die Lizenz zu erhalten, an das SRM, und Aufzeichnen durch die Endgerätvorrichtung von auf die aktuelle Interaktion bezogene Information, wobei die auf die Interaktion bezogene Information einen aktuellen Interaktionsstatus enthält und wobei sich der aktuelle Interaktionsstatus auf den aktuellen Interaktionsschritt bezieht;
lokales Suchen (701) durch das SRM nach einer Lizenz, die von der Endgerätvorrichtung angefordert wird, Verriegeln der Lizenz und Aufzeichnen von auf die aktuelle Interaktion bezogene Information;
Zurückleiten (702) durch das SRM der verriegelten Lizenz und der Statusinformation zu der Endgerätvorrichtung;
Empfangen (703) durch die Endgerätvorrichtung der verriegelten Lizenz und der Statusinformation, Installieren der von dem SRM zurückgeleiteten verriegelten Lizenz und Aktualisieren durch die Endgerätvorrichtung der auf die Interaktion bezogenen Information;
Detektieren (704) durch die Endgerätvorrichtung, dass die Kommunikation mit dem SRM unterbrochen ist, wenn die Endgerätvorrichtung das SRM auffordert, die Lizenz zu löschen, und Aktualisieren durch die Endgerätvorrichtung der auf die Interaktion bezogenen Information;
Detektieren (705) durch die Endgerätvorrichtung, dass die Kommunikation mit dem SRM wiederhergestellt wird;
Prüfen (706) durch die Endgerätvorrichtung, ob die Interaktion mit dem SRM unvollständig ist, in Übereinstimmung mit einer Kennung des SRM in der aufgezeichneten auf die Interaktion bezogenen Information; nach dem Bestimmen, dass die Interaktion mit dem SRM unvollständig ist, wenn die Endgerätvorrichtung das SRM auffordert, die Lizenz zu löschen, Auffordern durch die Endgerätvorrichtung des SRM, die Interaktion wiederherzustellen, und Bereitstellen durch die Endgerätvorrichtung des SRM mit der aufgezeichneten auf die Interaktion bezogenen Information;
Prüfen (707) durch das SRM, ob es lokal auf eine Interaktion bezogene Information gibt, nachdem die Anforderung von der Endgerätvorrichtung empfangen worden ist, Wiederherstellen durch das SRM der Interaktion beginnend bei dem damit in Beziehung stehenden Schritt, nachdem bestimmt worden ist, dass auf eine Interaktion bezogene Information vorhanden ist, und Zurückleiten durch das SRM einer Antwortnachricht zu der Endgerätvorrichtung;
Auffordern (708) durch die Endgerätvorrichtung des SRM, die lokale Lizenz zu löschen, nachdem die Antwortnachricht von dem SRM empfangen worden ist, und Aktualisieren durch die Endgerätvorrichtung der auf die Interaktion bezogenen Information;
Löschen (709) durch das SRM der lokalen Lizenz und Aktualisieren der auf die Interaktion bezogenen Information in Übereinstimmung mit der Aufforderung von der Endgerätvorrichtung (709);
Senden (710) durch das SRM einer Antwortnachricht zu der Endgerätvorrichtung, nachdem die Lizenz gelöscht worden ist; und
Aktivieren (711) durch die Endgerätvorrichtung der lokal verriegelten Lizenz, nachdem die Antwortnachricht von dem SRM empfangen worden ist.

2. Verfahren nach Anspruch 1, wobei die auf die Interaktion bezogenen Information ferner wenigstens eine der folgenden Alternativen oder eine Kombination hiervon umfasst: Kennung einer Peer-Vorrichtung während der Interaktion, Lizenzkennung, Typ der Interaktion, aktuelles Interaktionsergebnis und eindeutige Interaktionskennung.

## Revendications

1. Procédé pour reprendre une communication interrompue lorsqu'un dispositif terminal demande à un support amovible sécurisé, SRM, de supprimer une licence au cours d'un transfert de licence, le procédé comprenant les étapes consistant à :
envoyer (700), par le dispositif terminal, une demande d'obtention de la licence au SRM, et enregistrer, par le dispositif terminal, d'information concernant l'interaction en cours, lequel information concernant l'interaction comprend un état d'interaction en cours, et lequel état d'interaction en cours se rapporte à l'étape d'interaction en cours ;
rechercher (701), par le SRM, une licence locale demandée par le dispositif terminal, verrouiller la licence et enregistrer d'information concernant à l'interaction en cours ;
renvoyer (702), par le SRM, la licence verrouillée et l'information d'état au dispositif terminal ;
recevoir (703), par le dispositif terminal, la licence verrouillée et l'information d'état, installer la licence verrouillée renvoyée par le SRM et mettre à jour, par le dispositif terminal, l'information concernant l'interaction ;
détecter (704), par le dispositif terminal, une interruption de la communication avec le SRM lorsque le dispositif terminal demande au SRM de supprimer la licence, et mettre à jour, par le dispositif terminal, l'information concernant l'interaction ;
détecter (705), par le dispositif terminal, la reprise de la communication avec le SRM ;
vérifier (706), par le dispositif terminal, si l'interaction avec le SRM est inachevée conformément à un identifiant de SRM dans l'information concernant l'interaction enregistrées ; s'il est établi que l'interaction avec le SRM est inachevée lorsque le dispositif terminal demande au SRM de supprimer la licence, demander, par le dispositif terminal, au SRM de reprendre l'interaction, et fournir, par le dispositif terminal, l'information concernant l'interaction enregistrées au SRM ;
vérifier (707), par le SRM, s'il existe localement d'information concernant l'interaction suite à la réception de la demande émanant du dispositif terminal, reprendre, par le SRM, l'interaction à partir de l'étape associée si l'existence d'information concernant l'interaction est établie, et renvoyer, par le SRM, un message de réponse au dispositif terminal ;
demander (708), par le dispositif terminal, au SRM de supprimer la licence locale suite à la réception du message de réponse émanant du SRM, et mettre à jour, par le dispositif terminal, l'information concernant l'interaction ;
supprimer (709), par le SRM, la licence locale et mettre à jour l'information concernant l'interaction conformément à la demande émanant du dispositif terminal (709) ;
envoyer (710), par le SRM, un message de réponse au dispositif terminal suite à la suppression de la licence ; et
activer (711), par le dispositif terminal, la licence verrouillée localement suite à la réception du message de réponse émanant du SRM.

2. Procédé selon la revendication 1, dans lequel l'information concernant l'interaction comprend en outre au moins un des éléments suivants, ou une combinaison quelconque de ceux-ci : un identifiant d'un dispositif homologue au cours de l'interaction, un identifiant de licence, un type d'opération d'interaction, un résultat d'interaction en cours et un identifiant unique d'interaction.
